# EUROPÄISCHE PATENTSCHRIFT

(11) **EP 0 708 230 B1**
(45) Veröffentlichungstag und Bekanntmachung des Hinweises auf die Patenterteilung: **09.07.2003**
(21) Anmeldenummer: 95112491.6
(22) Anmeldetag: 09.08.1995
(51) Int. Cl.: F01N 3/36, F01N 3/20

(54) **Einrichtung zum Nachbehandeln von Abgasen einer selbstzündenden Brennkraftmaschine**
Device for after-treatment of exhaust gases of self ignition internal combustion engines
Dispositif de post-traitement de gaz d'échappement de moteur à combustion interne à auto-allumage

(30) Priorität: 12.10.1994 DE 4436415
(43) Veröffentlichungstag der Anmeldung: 24.04.1996
(73) Patentinhaber: ROBERT BOSCH GMBH, 70442 Stuttgart (DE)
(72) Erfinder: Rembold, Helmut, Dipl.-Ing., D-70435 Stuttgart (DE); Dettling, Hubert, D-71336 Waiblingen (DE); Stutzenberger, Heinz, Dr.-Ing., D-71665 Vaihingen (DE)

(56) Entgegenhaltungen:
- EP-A- 0 364 694
- EP-A- 0 381 236
- EP-A- 0 441 401
- EP-A- 0 487 886
- DE-A- 4 227 741
- US-A- 3 724 220
- US-A- 4 359 863

## Beschreibung

### Stand der Technik

Die Abgase von selbstzündenden Brennkraftmaschinen neigen wegen der Tatsache, daß sie mit einem hohen Luftüberschuß betrieben werden, zu einer hohen NOX-Emission. Diese tritt verstärkt bei Brennkraftmaschinen mit Direkteinspritzung in den Brennraum auf. Um diese Emission zu senken besteht eine Möglichkeit darin, eine NOX-Reduktion mit Hilfe eines entsprechenden Reduktionskatalysators durchzuführen. Dazu eignen sich zum Beispiel Katalysatoren auf Basis von Zeolithen. Ein weiteres Problem der selbstzündenden Brennkraftmaschinen liegt in der relativ niedrigen Abgastemperatur, die ein Anspringen der Reduktionsfunktion eines solchen Katalysators erschwert. Zur Förderung dieses Reduktionsprozesses wurde auch schon vorgeschlagen, das Abgassystem mit einem Brenner zu verbinden, der die Abgase aufheizt. Zur Förderung des Reduktionsprozesses wurde bereits eine Einrichtung gemäß der Gattung des Patentanspruches vorgeschlagen, von welcher der Patentanspruch 1 ausgeht.

Bei einer solchen, durch die Veröffentlichungen F. Schäfer und R. Van Basshuysen, "Schadstoffreduzierung und Kraftstoffverbrauch von PKW-Verbrennungsmotoren", Seite 115, erschienen im Springer-Verlag, 1993, bekannten Einrichtung wird als Reduktionsmittel Harnstoff in wässriger Lösung vorgesehen, die dem Abgassystem stromaufwärts des Katalysators zugeführt wird. Die Zumessung dieses Harnstoffs erfolgt dabei in aufwendiger Weise mittels eines Magnetventils, das den hohen Betriebstemperaturen im Bereich des Abgassystemes ausgesetzt ist und deshalb zum Verkleben neigt. Die Bereitstellung und Steuerung dieses Magnetventils zur Zumessung kleiner Mengen, die im Bereich von 1,5 Milligramm pro Arbeitstakt der Brennkraftmaschine liegen, ist sehr aufwendig. Insbesondere ist für die Zumessung des vom Magnetventil abgegebenen Harnstoffes die Bereitstellung von Druckluft erforderlich, die einmal den zugemessenen Harnstoff zum Abgassystem transportiert und zum anderen zur Druckerzeugung verwendet wird, um den Harnstoffvorratsbehälter auf den zur Einspritzung am Magnetventil erforderlichen Druck zu bringen. Für die Genauigkeit der Zumessung muß dieser Druck geregelt werden. Das Druckgefälle am Magnetventil muß zudem die feinverteilte Aufbereitung des Harnstoffes gewährleisten, derart, daß spätestens im Katalysator das durch Zerfall der Harnstoffverbindung in Verbindung mit Wärmeeinwirkung für die gewünschte Reduktion der NOX-Bestandteile im Abgas erforderliche NH₃-Abgas entsteht.

Diese Einrichtung ist sehr aufwendig und setzt eine hohe Abgastemperatur voraus, damit der Reduktionsvorgang auch sicher durchgeführt wird. Es besteht die Gefahr, daß bei Harnstoffüberdosierung und bei fehlenden Betriebsvoraussetzungen am Katalysator Harnstoff bzw. Ammoniak nicht vollständig umgesetzt wird und somit die Umwelt als Emissionsbestandteil belastet.

Eine weitere gattungsgemäße Einrichtung ist aus EP-A-0 441 401 (siche insbesondere Figur 9 ) bekannt.

Durch die EP-A-503 882 ist es ferner bekannt, als Reduktionsmittel HC, also Kraftstoff, zu verwenden, der stromaufwärts eines NOX-Reduktionskatalysators in der Zeolyt-Bauart in das Abgassystem der Brennkraftmaschine gesteuert durch die Temperatur des Katalysators eingebracht wird. Die Zumessung erfolgt dabei intermittierend, wobei HC in der porösen Struktur des Katalysators zwischengelagert sein soll, damit bei steigender Katalysatortemperatur dieses HC für die Umsetzung von NOX zur Verfügung steht. Diese Einrichtung hat neben der bereits oben dargestellten nachteiligen Verwendung eines Magnetventils und des damit verbundenen Aufwandes den Nachteil, daß die HC-Menge, die eingebracht wird, nicht unmittelbar eine Umsetzung der NOX-Bestandteile bewirken kann, sondern erst im Katalysator aufbereitet werden muß. Dies mag bei der bei der bekannten Einrichtung vorgesehenen Verwendung bei einer fremdgezündeten Brennkraftmaschine, die bekannterweise hohe Abgastemperaturen aufweist, noch machbar sein. Bei den relativ kälteren Abgasen einer selbstzündenden Brennkraftmaschine reicht diese Maßnahme nicht aus.

Die EP 0 364 694 beschreibt eine Einrichtung zur Abgasnachbehandlung, bei der Reduktionsmittel über eine zur Einstellung der Fördermenge steuerbare Pumpe zu einer Heizeinrichtung befördert wird, so daß das Reduktionsmittel erwärmt über eine einem Reduktionskatalysator vorgelagerte Zugabevorrichtung in den Abgasstrom eingebracht werden kann. In einer alternativen Ausführungsform wird zur Einstellung der Fördermenge nicht die Pumpe, sondern eine als steuerbares Ventil ausgebildete Zugabevorrichtung angesteuert.

### Vorteile der Erfindung

Die erfindungsgemäße Einrichtung mit den kennzeichnenden Merkmalen des Patentanspruchs 1 hat demgegenüber den Vorteil, daß trotz Verwendung eines intermittierend elektrisch gesteuerten Ventiles erreicht wird, daß kontinuierlich Reduktionsmittel in das Abgas eingebracht wird, und zwar in vorteilhafter Weise bereits in Dampfform, so daß eine intensive Vermischung mit dem Abgas und eine gute Verteilung sicher gewährleistet ist. Damit ergeben sich optimale Reaktionen in dem nachgeschalteten Reduktionskatalysator. Bei Verwendung eines porösen Körpers gemäß Anspruch 2 bietet sich eine besonders vorteilhafte Ausführung eines solchen Verdampfers. Solche poröse Körper sind als Sinterbaukörper bereits im breiten Einsatz von Großserienprodukten im Bereich hoher Temperaturen, so daß der Einsatz der erfindungsgemäßen Lösung unproblematisch verwirklicht werden kann. Die Anforderungen an das elektrisch gesteuerte Ventil sind dabei sehr gering, so daß bereits auf dem Markt befindliche Ventile wie Einspritzventile für die Benzineinspritzung bei einem Betriebsdruck um wenige bar Verwendung finden können. Es muß dabei lediglich Sorge getragen werden, daß der Austrittsquerschnitt den erforderlichen Zumeßmengen innerhalb der Taktung des Ventils klein genug ist.

In vorteilhafter Weise dient als Heizeinrichtung ein in den hohlen Körper ragender, den Innenraum des hohlen Körpers weitgehendst ausfüllender, bekannter, elektrisch beheizter Glühstift gemäß Patentansprüchen 2 bis 4. Solche Glühstifte sind als Starthilfe für selbstzündende Brennkraftmaschinen, die bekannten Glühkerzen, als Großserienprodukt beziehbar und erlauben eine kostengünstige Lösung der erfindungsgemäßen Einrichtung. In vorteilhafter Weise ist gemäß Anspruch 5 der Glühstift austauschbar und zu diesem Zweck gemäß Anspruch 7 in einem Verbindungssockel einsetzbar, über den der gemäß Anspruch 6 ausgestaltete hohle Körper als Sinterteil mit der Wand der abgasführenden Teile der Brennkraftmaschine verbunden wird. Besonders vorteilhaft ist hier auch die Verwendung von Kraftstoff als Reduktionsmittel, Kraftstoff, der bereits bei der zugeordneten Diesel-Brennkraftmaschine zur Verfügung steht und durch Verbrennung einerseits die Katalysatortemperatur erhöht und Ionen zur Verfügung stellt, mit deren Hilfe wirksam die Reduktion von NOX-Bestandteilen im Katalysator vorgenommen werden kann. Vorteilhaft kann ferner zusätzlich eine Abgaserwärmungseinrichtung gemäß Anspruch 9 vorgesehen werden, durch die insbesondere beim Start der noch kalten Brennkraftmaschine die Zeit bis zum wirksamen Einsatz des Reduktionskatalysators wesentlich verringert werden kann. Gemäß Patentansprüchen 10 und 11 wird dann zur völligen Umsetzung aller noch brennbaren Bestandteile der Abgase in dem katalytischen Reaktor ein Oxidationskatalysator nachgeschaltet.

### Zeichnung

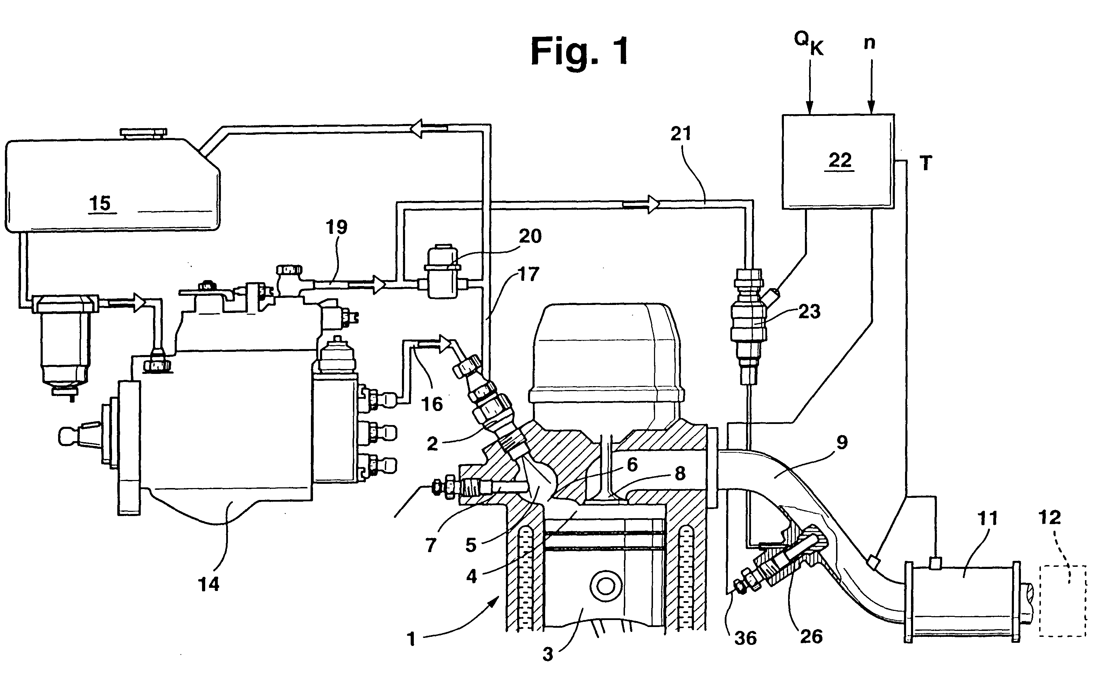

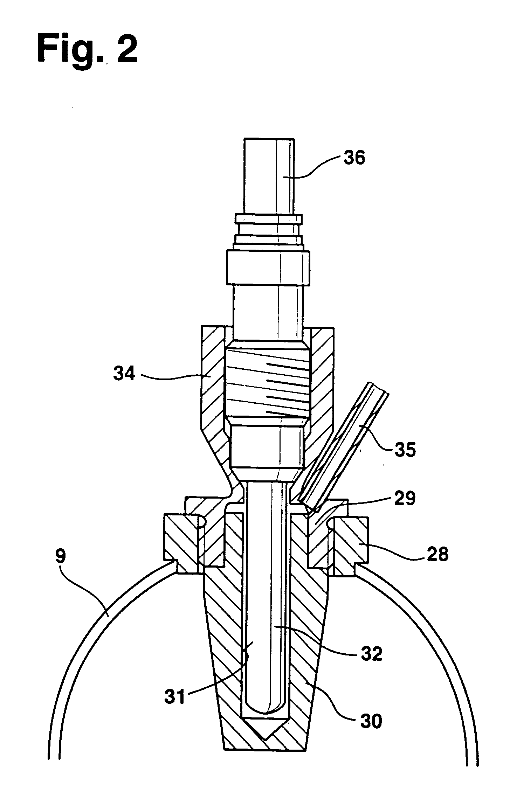

Ein Ausführungsbeispiel der Erfindung ist in der Zeichnung dargestellt und wird in der nachfolgenden Beschreibung näher erläutert. Es zeigen Figur 1 die schematische Darstellung eines Kraftstoffversorgungssystems einer selbstzündenden Brennkraftmaschine, ergänzt durch die erfindungsgemäße Einrichtung, und Figur 2 einen Schnitt durch den erfindungsgemäßen hohlen Körper zur Aufbereitung des Reduktionsmittels.

### Beschreibung des Ausführungsbeispiels

Von einer Brennkraftmaschine ist schematisch ein Schnitt durch einen Teil eines Zylinders 1 einer selbstzündenden Brennkraftmaschine wiedergegeben. Bei diesem Ausführungsbeispiel handelt es sich um eine selbstzündende Brennkraftmaschine mit indirekter Einspritzung, d.h. der Kraftstoff wird über ein Einspritzventil 2 nicht direkt in den unmittelbar von dem Brennkraftmaschinenkolben 3 begrenzten Hauptbrennraum 4 eingespritzt, sondern in eine diesem vorgeschaltete Wirbelkammer 5, die über einen Überströmkanal 6 mit dem Hauptbrennraum 4 verbunden ist. Als Starthilfe ist eine in diese Wirbelkammer ragende Glühkerze 7 vorgesehen. Die in Wirbelkammer und Hauptbrennraum verbrannten Bestandteile von eingespritztem Kraftstoff und Luft werden über ein Auslaßventil 8 in einen Abgaskanal 9 durch den Ausschiebehub des Brennkraftmaschinenkolbens 3 nach Abschluß des Expansionshubes übergeschoben. Der Abgaskanal 9 ist in der Regel als Abgaskrümmer, bestehend aus mehreren von je einem Motorzylinder abführenden Kanälen, zusammengefaßt, der in ein Sammelrohr übergeht, das über ein oder mehrere Stränge ins Freie führen. In dem Abgassammelrohr wird in dem dargestellten Beispiel ein Reduktionskatalysator 11 angeordnet, dem, wie gestrichelt angedeutet, ein Oxidationskatalysator und gegebenenfalls die übliche Schalldämpfereinrichtung der Auspuffanlage einer Brennkraftmaschine nachgeschaltet.

Die Kraftstoffversorgung des Einspritzventils 2 pro Zylinder erfolgt durch eine Kraftstoffeinspritzpumpe 14, die Kraftstoff aus einem Kraftstoffvorratsbehälter 15 erhält und über Einspritzleitungen 16 den auf Hochdruck gebrachten Kraftstoff dosiert und im Wechsel jeweils einem der Einspritzventile 2 zuführt. Leckkraftstoff der einzelnen Einspritzventile wird über Leckleitungen 17 zum Kraftstoffvorratsbehälter wieder zurückgeführt.

Die Kraftstoffeinspritzpumpe ist zur Förderung des Kraftstoffs aus dem Vorratsbehälter in einen internen Saugraum mit einer nicht weiter gezeigten Vorförderpumpe verbunden, wobei üblicherweise in dem Saugraum ein drehzahlabhängig gesteuerter Kraftstoffdruck eingehalten wird, um drehzahlabhängige Funktionen zu steuern. Der Überlaufdruck zur Steuerung dieses Saugraumdrucks entweicht über die Überlaufleitung 19 üblicherweise drucklos zum Kraftstoffvorratsbehälter 15 zurück. Im vorliegenden Beispiel ist jedoch in die Überlaufleitung 19 ein Druckregler 20 geschaltet, der zum Beispiel auf 0,3 bar eingestellt werden kann, so daß stromaufwärts dieses Druckreglers 20 ein Versorgungsdruck von 0,3 bar zur Verfügung steht. Über eine Kraftstoffleitung 21 wird dieser Druck einem elektrisch gesteuerten Dosierventil 23 zugeführt, das gesteuert von einer Steuervorrichtung 22 in Abhängigkeit von Betriebsparametern wie Last (Q_{K}) und Drehzahl (n) Kraftstoff als Reduktionsmittel einem Verdampfer 26 zuführt. Dieser sitzt in dem Abgaskanal stromaufwärts des Reduktionskatalysators 11. Die Konstruktion dieses Verdampfers ist Figur 2 im Detail entnehmbar. Vorgesehen ist dazu in der Wand des Kraftstoffkanals 9 eine Einschraubmuffe 28, in die ein Verbindungssockel 29 dicht einschraubbar ist. In diesen Verbindungssockel ist ein hohler Körper 30 eingesetzt, der in den Abgasstrom im Abgaskanal 9 hineinragt.

Dieser hohle Körper weist eine poröse hitzebeständige Wand auf und kann zum Beispiel aus Sintermaterial, Sinterbronze oder Keramik bestehen und weist im Inneren ein Sackloch 31 auf, in das, das Sackloch formgleich aushüllend, ein Glühstift 32 als Heizeinrichtung ragt. Dieser ist koaxial zum rotationssymmetrisch ausgebildeten hohlen Körper 30 von außerhalb des Abgaskanals in einem Muffenteil 34 des Verbindungssockels 29 eingeschraubt, derart, daß der zwischen Sackloch 31 und Glühstift 32 verbleibende Innenraum nach außen, außerhalb des Abgaskanals 9 dicht abgeschlossen ist. In das Sackloch 31 mündet ferner eine Verbindungsleitung 35, die vom Dosierventil 23 herführt und die das vom Dosierventil 23 abgegebene Reduktionsmittel, den Dieselkraftstoff, in den bleibenden Hohlraum im Sackloch 31 leitet.

Die Beheizung des Glühstiftes 32 erfolgt über eine Steuerleitung 36 von der Steuervorrichtung 22 her.

Der Katalysator 11 ist als Reduktionskatalysator ausgebildet und dient zur Reduzierung der NOX-Bestandteile im Abgas der Brennkraftmaschine. Die vorliegende Brennkraftmaschine ist eine selbstzündende Brennkraftmaschine, die bekannterweise mit einem erheblichen Luftüberschuß betrieben wird und aufgrund dieses Brennverfahrens einen erheblichen Anteil an NOX-Bestandteilen im Abgas aufweist. Dieser Anteil ist bereits bei einer Brennkraftmaschine, die mit dem gezeigten Wirbelkammerbrennverfahren arbeitet groß, größer ist dieser Anteil noch bei direkt in den Hauptbrennraum 4 einspritzenden Brennkraftmaschinen. Wegen des hohen Luftüberschusses, der auch noch im Abgas vorliegt und einen äußerst geringen CO-Anteil im Abgas zur Folge hat, kann eine mit diesem CO wirksam durchzuführende Reduktion der NOX-Bestandteile nicht in zufriedenstellendem Maße erzielt werden. Hinzu kommt erschwerend, daß die Abgase von selbstzündenden Brennkraftmaschinen eine gegenüber gezündeten Brennkraftmaschinen wesentlich geringere Temperatur aufweisen, die das Anspringverhalten eines nachgeschalteten Katalysators und eine hohe Effizienz dieses Katalysators wesentlich erschweren. Mit Hilfe des Einbringens von Reduktionsmittel wird diesen Nachteilen begegnet. Der eingebrachte Kraftstoff ermöglicht wirksam eine Reduktion im Katalysator. Zugleich erfolgt auch eine thermische Umsetzung von Kraftstoff im Katalysator, was die Arbeitstemperatur des Katalysators erhöht und dessen Wirksamkeit verbessert. Dazu ist es zu der Erhöhung der Wirksamkeit erforderlich, daß das eingebrachte Reduktionsmittel fein verteilt und schnell umsetzbar in das Abgas gelangt. Wichtig ist zudem, daß gerade die erforderliche Menge an Reduktionsmittel eingebracht wird, die zur wirksamen Abgasentgiftung notwendig ist. Mit Hilfe des elektrisch gesteuerten Ventils 23, vorgesteuert über die Steuervorrichtung 22, wird nun entsprechend dem Abgasvolumen, ermittelt aus Last- und Drehzahl die jeweils erforderliche Reduktionsmittelmenge eingebracht, unter Berücksichtigung weiterhin der Temperatur T des Abgases und/oder des Katalysators.

Die gute Aufbereitung des hier als Reduktionsmittel verwendeten Kraftstoffs erfolgt mit Hilfe des Verdampfers 26, nachdem mit Hilfe des vorerwähnten Ventils 23 die Kraftstoffmenge gesteuert wird. Der Verdampfer gibt dabei nur dampfförmigen Kraftstoff, der durch die poröse Wand des hohlen Körpers in das Abgas gelangt, ab. Dieser hohle Körper wird einerseits vom Abgas, andererseits auch vom Glühstift 32 erwärmt, insbesondere in der Startphase der Brennkraftmaschine, solange die Abgastemperatur zu niedrig ist, um einen Verdampfungsvorgang zu bewirken. Die Steuerung der Beheizung erfolgt ebenfalls in Abhängigkeit von den erwähnten Parametern, so daß eine kontinuierliche dampfförmige Kraftstoffzugabe in das Abgas in der erforderlichen Menge gewährleistet ist.

In vorteilhafter Weise wird das Dosierventil 23 vom Kraftstoffkreislauf der Kraftstoffeinspritzpumpe, die sowieso zum Betrieb der Brennkraftmaschine notwendig ist, versorgt. Mit Hilfe des Druckreglers 20 steht dabei der erforderliche niedrige Druck zur Verfügung, ohne großen Mehraufwand. Das Dosierventil kann in einfacher Weise ein Niederdruckeinspritzventil sein, das durch Reduzierung der Austrittsöffnung auf ein einziges Loch in leichter Weise modifiziert werden kann und als Großserienteil preiswert zur Verfügung steht. Glühstifte sind in gleicher Weise Serienteile, die preiswert einsetzbar sind. Durch die erwähnte Steuerung, die der Effizienz der Reduktion dient, aber auch vermeidet, daß überschüssiges HC als Emission in die Umwelt gelangt,wird zum Betrieb des Reduktionskatalysators nur ein geringer Mehrkraftstoffverbrauch benötigt.

## Patentansprüche

1. Einrichtung zum Nachbehandeln von Abgasen einer selbstzündenden Brennkraftmaschine mit einem Abgassammelsystem (9), in dem ein Reduktionskatalysator (11) zur Reduktion von NOX-Bestandteilen des Abgases der Brennkraftmaschine angeordnet ist, mit einem elektrisch steuerbaren Ventil (23) als Dosiereinrichtung zum dosierten Einbringen eines Reduktionsmittels in den Strom des dem Katalysator (11) zugeführten Abgases in Abhängigkeit von in einem Kennfeld gespeicherten Werten des NOX-Gehalts im Abgas bei verschiedenen Betriebsparametern der Brennkraftmaschine und des Katalysators und mit einer Einrichtung (26) zur Aufbereitung des einzubringenden Reduktionsmittels, **dadurch gekennzeichnet, dass** die Einrichtung zur Aufbereitung des Reduktionsmittels eine Verdampfungseinrichtung ist, so dass das durch das elektrisch gesteuerte Ventil (23) zuvor dosierte Reduktionsmittel verdampft werden und in Dampfform in den Abgasstrom gelangen kann.

2. Einrichtung nach Anspruch 1, **dadurch gekennzeichnet, daß** die Verdampfungseinrichtung ein in den Abgasstrom ragender hohler Körper (30) ist, dessen Innenraum (31) vom Abgasstrom durch eine poröse Wand getrennt ist und in dessen Innenraum das Reduktionsmittel eingebracht wird und mit einer Heizeinrichtung (32), durch die das Reduktionsmittel bis zur Verdampfungstemperatur erwärmt wird.

3. Einrichtung nach Anspruch 2, **dadurch gekennzeichnet, daß** als Heizeinrichtung ein in den Innenraum ragender Heizkörper (32) vorgesehen ist.

4. Einrichtung nach Anspruch 3, **dadurch gekennzeichnet, daß** die Innenwand des hohlen Körpers den Heizkörper in geringem Abstand umfaßt.

5. Einrichtung nach Anspruch 4, **dadurch gekennzeichnet, daß** der Heizkörper ein elektrisch beheizter Glühstift (32) ist.

6. Einrichtung nach Anspruch 5, **dadurch gekennzeichnet,daß** der Glühstift austauschbar mit einem Befestigungselement (29,34) verbunden ist.

7. Einrichtung nach Anspruch 6, **dadurch gekennzeichnet, daß** die poröse Wandung ein Sinterteil ist.

8. Einrichtung nach Anspruch 7, **dadurch gekennzeichnet, daß** der Körper über einen Verbindungssockel (29) mit der Wand des abgasführenden Systems (5) verbunden ist, in der der Glühstift (32) mit diesem Verbindungssockel einschraubbar ist.

9. Einrichung nach einem der vorstehenden Ansprüche, **dadurch gekennzeichnet, daß** als Reduktionsmittel Kraftstoff verwendet wird, insbesondere Dieselkraftstoff.

10. Einrichtung nach einen der vorstehenden Ansprüche, **dadurch gekennzeichnet, daß** in das Abgassammelsystem stromabwärts des Katalysators eine Oxidationsvorrichtung (12) zur Nachoxidation des Abgases vorgesehen ist.

11. Einrichtung nach Anspruch 10, **dadurch gekennzeichnet, daß** die Vorrichtung zur Nachoxidation ein Oxidationskatalysator (12) ist.

## Claims

1. Device for the aftertreatment of exhaust gases from a compression-ignition internal combustion engine having an exhaust-gas collection system (9), in which there is a reduction catalytic converter (11) for reducing NOx constituents in the exhaust gas from the internal combustion engine, having an electrically controllable valve (23) as metering device for the metered introduction of a reducing agent into the stream of exhaust gas fed to the catalytic converter (11) as a function of values for the NOx content in the exhaust gas, which are stored in a characteristic diagram, for different operating parameters of the internal combustion engine and of the catalytic converter, and having a device (26) for preparing the reducing agent which is to be introduced, **characterized in that** the device for preparing the reducing agent is an evaporation device, so that the reducing agent which has previously been metered in by the electrically controlled valve (23) can be evaporated and can enter the exhaust-gas stream in vapour form.

2. Device according to Claim 1, **characterized in that** the evaporation device is a hollow body (30) which projects into the exhaust-gas stream, the interior (31) of which is separated from the exhaust-gas stream by a porous wall and into the interior of which the reducing agent is introduced, and having a heater device (32), by which the reducing agent is heated to the evaporation temperature.

3. Device according to Claim 2, **characterized in that** the heater device provided is a heater body (32) which projects into the interior.

4. Device according to Claim 3, **characterized in that** the inner wall of the hollow body surrounds the heater body at a short distance.

5. Device according to Claim 4, **characterized in that** the heater body is an electrically heated glow plug element (32).

6. Device according to Claim 5, **characterized in that** the glow plug element is exchangeably connected to a securing element (29, 34).

7. Device according to Claim 6, **characterized in that** the porous wall is a sintered part.

8. Device according to Claim 7, **characterized in that** the body is connected, by means of a connection pedestal (29), to the wall of the exhaust-guiding system (5), into which the glow plug element (32) can be screwed by means of this connecting pedestal.

9. Device according to one of the preceding claims, **characterized in that** the reducing agent used is fuel, in particular diesel fuel.

10. Device according to one of the preceding claims, **characterized in that** an oxidation means (12) for reoxidation of the exhaust gas is provided in the exhaust-gas collection system downstream of the catalytic converter.

11. Device according to Claim 10, **characterized in that** the reoxidation means is an oxidation catalytic converter (12).

## Revendications

1. Installation pour le traitement de gaz d'échappement dans un moteur à combustion interne à allumage non commandé, comportant un système collecteur de gaz d'échappement (9) muni d'un catalyseur réducteur (11) pour réduire les oxydes d'azote NOx contenus dans les gaz d'échappement du moteur, ainsi qu'une soupape à commande électrique (23) comme installation de dosage pour doser l'introduction de l'agent réducteur dans la veiné des gaz d'échappement arrivant sur le catalyseur (11), en fonction des valeurs des teneurs en oxydes d'azote NOx contenues dans les gaz d'échappement et mémorisées dans un champ de caractéristiques, suivant les différents paramètres de fonctionnement du moteur à combustion interne et du catalyseur et avec une installation (26) pour préparer l'agent réducteur à introduire,
**caractérisée en ce que**
l'installation pour préparer l'agent réducteur est une installation d'évaporation de manière à évaporer l'agent réducteur dosé préalablement par la soupape à commande électrique (23) pour l'introduire à l'état de vapeur dans la veine des gaz d'échappement.

2. Installation selon la revendication 1,
**caractérisée en ce que**
l'installation d'évaporation est un corps creux (30) pénétrant dans la veine de gaz d'échappement et dont le volume intérieur (31) est séparé de la veine des gaz d'échappement par une paroi poreuse, un agent réducteur étant introduit dans la cavité et chauffé par une installation de chauffage (32) jusqu'à la température d'évaporation.

3. Installation selon la revendication 2,
**caractérisée en ce que**
l'installation de chauffage est un corps creux (32) qui pénètre dans la cavité.

4. Installation selon la revendication 3,
**caractérisée en ce que**
la paroi intérieure du corps creux entoure l'organe de chauffage en laissant une faible distance.

5. Installation selon la revendication 4,
**caractérisée en ce que**
le corps creux est une bougie de préchauffage (32) électrique.

6. Installation selon la revendication 5,
**caractérisée en ce que**
la bougie de préchauffage est reliée de manière remplaçable à un élément de fixation (29, 34).

7. Installation selon la revendication 6,
**caractérisée en ce que**
la paroi poreuse est une pièce frittée.

8. Installation selon la revendication 7,
**caractérisée en ce que**
le corps poreux est relié par un socle de liaison (29) à la paroi du système des gaz d'échappement (5), et la bougie de préchauffage (32) se visse dans ce socle de liaison.

9. Installation selon l'une des revendications précédentes,
**caractérisée en ce que**
l'agent réducteur est du carburant, notamment du gasoil.

10. Installation selon l'une des revendications précédentes,
**caractérisée par**
un dispositif d'oxydation (12) pour assurer l'oxydation finale des gaz d'échappement, prévu dans le système collecteur de gaz d'échappement en aval du catalyseur.

11. Installation selon la revendication 10,
**caractérisée en ce que**
le dispositif d'oxydation est un catalyseur d'oxydation (12).
